# EUROPEAN PATENT APPLICATION

(11) **EP 4 101 811 A1**
(43) Date of publication of application: **14.12.2022**
(21) Application number: 22159853.5
(22) Date of filing: 03.03.2022
(51) Int. Cl.: C01B 3/04, C25B 1/04, C25B 1/55, C25B 9/50

(54) **HYDROGEN PRODUCTION CELL**

(30) Priority: 07.06.2021 JP 2021094971
(71) Applicant: Hitachi, Ltd., Tokyo 100-8280 (JP)
(72) Inventor: YABUUCHI, Shin, Tokyo, 100-8280 (JP); TAKAMATSU, Daikoh, Tokyo, 100-8280 (JP); FUKATANI, Naoto, Tokyo, 100-8280 (JP)
(74) Representative: MERH-IP Matias Erny Reichl Hoffmann Patentanwälte PartG mbB

(57) **Abstract**

Photocatalyst technology is provided which is for creating a structure that facilitates spatial charge separation without individually making a p-type semiconductor and an n-type semiconductor, in order to enable separation between electrons and positive holes and inhibition of recombination. A hydrogen production cell 100 includes: a photocatalyst composed of a semiconductor; an aqueous medium; and a ferroelectric placed to face the photocatalyst, the ferroelectric creating a potential gradient with respect to the photocatalyst.

## Description

### BACKGROUND OF THE INVENTION

The present invention relates to a hydrogen production cell and, more particularly, to technology effectively applied to hydrogen production cells for producing hydrogen through water splitting by reaction induced by light energy.

In recent years, various measures have taken to reduce CO2 emissions for the solution of the environmental issues such as global warming. Among them, there is a need for the promotion of utilization of zero CO₂ emission power generation using renewable energy such as solar-electric power generation and wind power generation. However, because the renewable energy used in power generation is natural energy, the amount of power generation significantly varies with time of day, time of year, and geographical region. Therefore, the renewable energy is characterized by great fluctuations. For high-efficient use of such energy with great fluctuations, a system and/or functionality for adjusting energy fluctuations is absolutely essential.

In recent years, Power to Gas (P2G) has drawn attention which is a technology to store temporarily energy such as electrical power in gaseous form. Hydrogen among gases produces only water when burning. Accordingly, the hydrogen is drawing attention as completely clean energy source without CO₂ emissions. For this purpose, photocatalyst is drawing attention which enables generation of hydrogen from water and solar energy and storage of energy as hydrogen. Suggestions about such photocatalyst are described, for example, in International Publication No. WO2017/164191, Japanese Unexamined Patent Application Publications Nos. 2008-104899 and 2017-155332, and the like.

The following technology/technique is technology/technique studied by the inventors, rather than known technology/technique.

With the photocatalyst, the larger the band gap of a semiconductor that absorbs ultraviolet light, the higher the redox reactivity becomes, but if near-infrared and/or visible light with a large proportion of energy to solar light can be fully used, an increase in utilization efficiency of solar light may be achieved, which needs use of a suitable band gap material. Also, electron-hole pairs generated under light irradiation may be recombined prior to being used in water splitting, and therefore this creates a need for efficient separation between electrons and positive holes and inhibition of recombination.

As a water splitting photocatalyst, a p-n junction photocatalyst with p-type and n-type semiconductors joined together has been studied. In solar cells, for the purpose of efficient separation between electrons and positive holes, a junction between the p-type semiconductor and the n-type semiconductor is made in order to create a structure that facilitates spatial separation between electrons and positive holes. Necessity for making such a p-n junction is that appropriate doping is performed to make individually the p-type semiconductor and the n-type semiconductor. However, in the case of materials for oxide semiconductor and the like, some of the materials are difficult to be made into a p-type semiconductor, and no p-type semiconductor may be obtained. The oxide semiconductor with stable structure is apt to become n-type. Because of this, it has been difficult to find out a material capable of making a p-n conjunction.

### SUMMARY OF THE INVENTION

It is an object of the present invention to create a structure that facilitates spatial charge separation without individually making a p-type semiconductor and an n-type semiconductor, in order to provide a hydrogen production cell using a photocatalyst enabling separation between electrons and positive holes and inhibition of recombination.

These and other problems and novel features will be apparent from a reading of the following description in the specification and a review of the associated drawings.

Typical aspects of the invention will be briefly summarized as follows.

According to one embodiment, in a hydrogen production cell having a photocatalyst composed of a semiconductor and an aqueous medium, a ferroelectric substance is placed to face the photocatalyst, the ferroelectric substance creating a potential gradient with respect to the photocatalyst.

According to the above embodiment, a hydrogen production cell is provided which uses a photocatalyst capable of effectively using light energy for a desired reaction such as a water decomposition reaction and/or the like.

### BRIEF DESCRIPTION OF THE DRAWINGS

Fig. 1 is a cross-sectional view illustrating a first example configuration of a photocatalyst electrode according to an embodiment;
Fig. 2 is a diagram illustrating the relationship between electric field and polarization of a ferroelectric;
Fig. 3 is a cross-sectional view illustrating a second example configuration of a photocatalyst electrode according to an embodiment;
Fig. 4 is a cross-sectional view illustrating a third example configuration of a photocatalyst electrode according to an embodiment;
Fig. 5 is a cross-sectional view illustrating a fourth example configuration of a photocatalyst electrode according to an embodiment;
Fig. 6A is a plan view illustrating a fifth example configuration of a photocatalyst electrode according to an embodiment;
Fig. 6B is a perspective view illustrating a region B in Fig. 6A;
Fig. 6C is a cross-sectional view of the photocatalyst electrode taken along the C-C line of Fig. 6A;
Fig. 7A is a diagram illustrating a ferroelectric layer having a plurality of periodically polarization-inverted ferroelectric domains;
Fig. 7B is a plan view illustrating a sixth example configuration of a photocatalyst electrode according to an embodiment;
Fig. 8 is a diagram illustrating how to form the photocatalyst electrode in Fig. 7B; and
Fig. 9 is a diagram illustrating an example conceptual configuration of a hydrogen production cell according to an embodiment.

### DETAILED DESCRIPTION OF THE PREFERRED EMBODIMENTS

Embodiments and examples according to the present invention will now be described with reference to the accompanying drawings. Throughout the description and drawings, like reference signs are used to indicate like elements and a similar description may be omitted. Although, for better understanding of the disclosure, the drawings may depict schematically as compared with practical implementations, the drawings are provided solely for illustrative purposes and should not interpreted as limiting the present invention.

### Embodiments

Prior to describing embodiments according to the invention, a water decomposition reaction by a photocatalytic reaction will be discussed.

A water decomposition reaction by a photocatalytic reaction and a water electrolysis reaction caused by use of a solar cell are expressed in general by reaction a formula (1) as follows.

H₂O → H₂+1/2O₂ (1)

On the catalyst surface, hydrogen production and oxygen production as expressed by chemical reaction formulae (2), (3) occur individually.

2H⁺ + 2e⁻ → H₂ (2)

H₂O → 2H⁺ + 2e⁻ + 1/2O₂ (3)

When a semiconductor exhibiting photocatalytic properties absorbs light of energy greater than band gap, electrons in a valence band are excited into a conduction band, thereby producing electrons and positive holes which then initiate water splitting, respectively.

With the photocatalyst, the larger the band gap of a semiconductor that absorbs ultraviolet light, the higher the redox reactivity becomes, but if near-infrared and/or visible light with a large proportion of energy to solar light can be fully used, an increase in utilization efficiency of solar light may be achieved, which needs use of suitable band gap materials. Also, electron-hole pairs generated under light irradiation may be recombined prior to being used in water splitting. Therefore, this creates a need for efficient separation between electrons and positive holes and inhibition of recombination.

As described earlier, in solar cells, for the purpose of efficient separation between electrons and positive holes, a junction between a p-type semiconductor and an n-type semiconductor is made in order to create a structure that facilitates spatial separation between electrons and positive holes. Necessity for making such a p-n junction is that appropriate doping is performed to make individually the p-type semiconductor and the n-type semiconductor. However, in the case of materials for oxide semiconductors and the like, some of materials are difficult to be made into a p-type semiconductors, and thus no p-type semiconductor may be obtained.

In the present invention, a structure by which spatial charge separation is promoted is made without individually making the p-type semiconductor and the n-type semiconductor, in order to provide separation between electrons and positive holes and inhibition of recombination thereof. Also, the surface area of a semiconductor in which the exited electrons and positive holes are utilized is increased in order to increase the reaction efficiency of water and/or a compound as fuel obtained by reduction of carbon dioxide, for use in hydrogen production. This makes it possible to provide a hydrogen production cell using a photocatalytic semiconductor which is capable of effectively using light energy for a desired reaction such as a water decomposition reaction.

More specifically, the present invention provides a structure that enables improved efficiency of production of hydrogen and oxygen through water splitting by inhibiting recombination of carriers which are produced by irradiating, with light, a photocatalytic semiconductor of thin film or bulk. For this end, by way of example, a spontaneously polarized ferroelectric material and a semiconductor material exhibiting photocatalytic effects are stacked one on top of another. By the ferroelectric material, an effective electric field is applied to the photocatalytic semiconductor (i.e., create a potential gradient with respect to the photocatalytic semiconductor) to promote the spatial separation between electrons and positive holes and inhabit recombination of carriers. By virtue of this, the photocatalytic effects in proximity to the ferroelectric may be enhanced. This obviates the necessity of achieving separately material formations for a p-type semiconductor and an n-type semiconductor, and thus the tendency of electrons and positive holes to recombine may be reduced. Therefore, a stable hydrogen production cell is provided.

Embodiments according to the present invention will now be described with reference to the accompanying drawings.

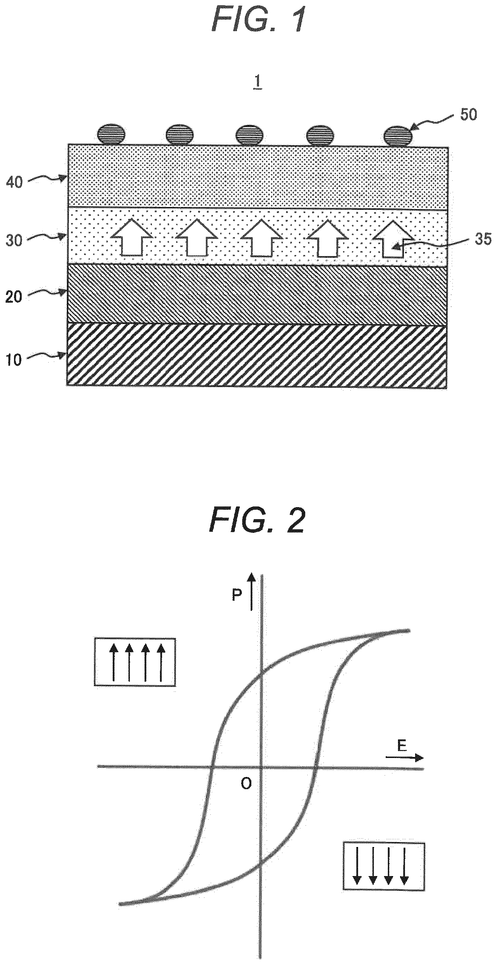

Fig. 1 is a cross-sectional view illustrating a first example configuration of a photocatalyst electrode according to the embodiments. Fig. 2 is a diagram illustrating the relationship between electric field and polarization of a ferroelectric.

As illustrated in Fig. 1, a photocatalyst electrode 1 used in a hydrogen production cell has a substrate 10, an electrode 20 placed in contact with the top face of the substrate 10, a ferroelectric layer 30 placed in contact with the top face of the electrode 20, a semiconductor photocatalyst layer 40 placed in contact with the tope face of the ferroelectric layer 30, and promoters 50 adhering to the surface of the semiconductor photocatalyst layer 40. It is to be understood that in the photocatalyst electrode 1, the promoters 50 are not an essential configuration, but providing the promoters 50 may yield about an improvement in photocatalytic reaction rate.

The substrate 10 may be formed from, for example, quartz. The electrode (also referred to as an "electrode layer") 20 may be formed from, for example, Pt (platinum). The electrode 20 may translate to an electrode layer.

The ferroelectric layer 30 may be formed by use of, for example, BaTiO₃, Pb(Zr,Ti)O₃, LiNbO₃, LiTaO₃, YbFe₂O₄ and/or the like. For the ferroelectric layer 30, multiferroic materials with magnetization at room temperature such as Pb₃TeMn₃P₂O₁₄ may be used. The use of the multiferroic materials enables control on the direction of electric polarization by magnetic fields.

The semiconductor photocatalyst layer 40 may be formed by use of a material selected from the group of, for example, ATa₂O₆ (A: Sr, Ba), Sr₂Nb₂O₇, Sr₂Ta₂O₇, ATa₂O₆ (A: Ca, Sr, Ba), K₃Ta₃Si₂O13, ATaO₃ (A:Li,Na,K), AgTaO₃, NaTaO₃, K₂LnTa₅O₁₅, K₃Ta₃B₂O₁₂, Cs₂Nb₄O₁₁, Ba₅Nb₄O₁₅, ATa₃O₈ (A:Rb, Cs), Cs₄Ta₁₀O₂₇, Cs₆Ta₁₆O₄₃, ZnS, NaInS₂, SrTiO₃, AgGaS2, CuGaS2, CuInS₂-AgInS₂-ZnS, CuInS2-AgInS2, A₂Ti₂O₇ (A: Sc, Y, La), SnNb₂O₆, BiVO₄, Bi₂MoO₆, Bi₂WO₆, AgNbO₃, Ag₃VO₄, Ag_{0.5}Pr_{0.5}TiO₃, TiO₂, PbMoO₄:Cr, SrTiO₃:Ir, SnNb₂O₆ and the like. A material resulting from substitution of nitrogen or sulfur for a portion of oxygen in the above materials may be used for the semiconductor photocatalyst layer 40. The materials mentioned above are illustrative only, and any semiconductor material other than the above may be used for the semiconductor photocatalyst layer 40.

The promoters 50 include Pt (platinum), Ru (ruthenium), Rh (rhodium), Cr (chromium), and/or the like.

As illustrated in Fig. 1, the ferroelectric layer 30 and the semiconductor photocatalyst layer 40 are stacked one on top of another. Because of this, the ferroelectric layer 30 is placed to face the semiconductor photocatalyst layer 40. An electric field is applied from the electrode 20 to the ferroelectric layer 30, so that the ferroelectric layer 30 may change the direction of polarization. As illustrated in Fig. 1, the ferroelectric layer 30 is designed such that electric polarization 35 is in a direction perpendicular to the top face of the substrate 10 (in the upward direction in the example). Typically, the relationship between the ferroelectric electric polarization 35 and an electric field exhibits hysteresis characteristics as illustrated in Fig. 2. When an electric field is applied to orient the polarization to the same direction, the state of spontaneous polarization 35 is maintained. By using such materials, an electric field is applied to the semiconductor photocatalyst layer 40 located close to the ferroelectric layer 30. By the ferroelectric layer 30, an effective electric field is applied to the semiconductor photocatalyst layer 40, that is, a potential gradient is created with respect to the semiconductor photocatalyst layer 40 to promote the spatial separation between electrons and positive holes and inhabit recombination of carriers. By virtue of this, the photocatalytic effects may be enhanced in the semiconductor photocatalyst layer 40 in proximity to the ferroelectric layer 30.

The photocatalyst electrode 1 is immersed in an aqueous medium stored in the hydrogen production cell, and the photocatalyst electrode 1 is irradiated with, for example, solar light. The light irradiation allows the semiconductor photocatalyst layer 40 to produce carriers (electrons and positive holes). Here, the ferroelectric layer 30 is electrically polarized, and an electric field (potential gradient) is applied to the semiconductor photocatalyst layer 40 by the electric polarization. As a result, spatial charge separation between the electrons and positive holes generated by the light irradiation is induced in the semiconductor photocatalyst layer 40, and recombination of the electrons and the positive holes is inhibited. The electron and the positive holes after the spatial charge separation within the semiconductor photocatalyst layer 40 initiate a decomposition reaction of the aqueous medium with high efficiency, and thus hydrogen and oxygen are generated.

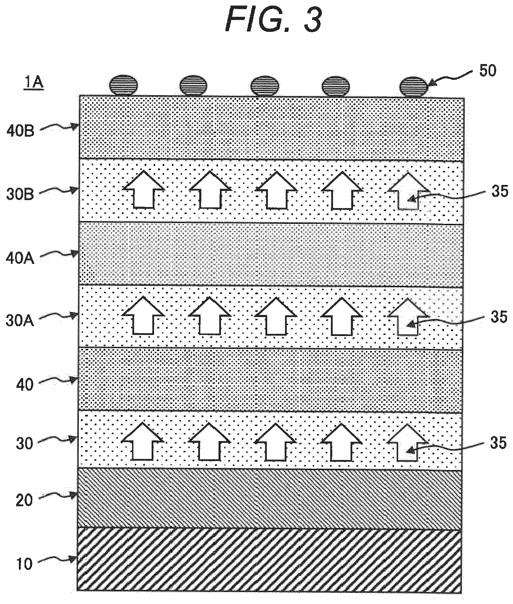

Fig. 3 is a cross-sectional view illustrating a second example configuration of a photocatalyst electrode according to the embodiments. The difference between a photocatalyst electrode 1A illustrated in Fig. 3 and the photocatalyst electrode 1 in Fig. 1 is that, in the photocatalyst electrode 1A, a ferroelectric layer 30A, a semiconductor photocatalyst layer 40A, a ferroelectric layer 30B, and a semiconductor photocatalyst layer 40B are stacked in this order on a semiconductor photocatalyst layer 40 in a multilayer fashion. By stacking the ferroelectric layers (30, 30A, 30B) and the semiconductor photocatalyst layers (40, 40A, 40B) in a multilayer fashion, the number of interfaces between the semiconductor photocatalyst layer (40, 40A, 40B) and the ferroelectric layer (30, 30A, 30B) may be increased. Because of charge bias arising in proximity to the interface between the semiconductor photocatalyst layer and the ferroelectric layer, one of both the electrons and the positive holes is collected according to the direction of the polarization 35 of the ferroelectric layer (30, 30A, 30B). Therefore, the charges are particularly spatially separated in proximity to the interface. Thus, the number of electrons or positive holes in the photocatalyst electrode 1A in Fig. 3 may be increased as compared with that in the photocatalyst electrode 1 in Fig. 1.

In this manner, a plurality of sets of the ferroelectric layer (30, 30A, 30B) and the semiconductor photocatalyst layer (40, 40A, 40B) are provided, so that it is possible to increase the surface area (the interface area) of the semiconductor photocatalyst layer (40, 40A, 40B) in which the electrons and positive holes excited by the light irradiation are used. This enables an increase in reaction efficiency of a compound used in hydrogen production.

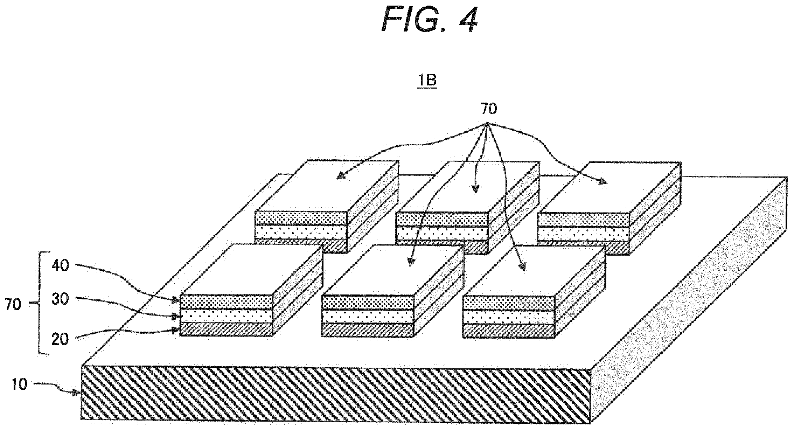

Fig. 4 is a cross-sectional view illustrating a third example configuration of a photocatalyst electrode according to the embodiments. The difference between a photocatalyst electrode 1B illustrated in Fig. 4 and the photocatalyst electrode 1 in Fig. 1 is that, in the photocatalyst electrode 1B, the electrode 20, the ferroelectric layer 30, and the semiconductor catalyst layer 40 are designed as a pillar structure 70, and a plurality of pillar structures 70 are formed on the top face (surface) of the substrate 10. The promotors 50 may be placed on the top faces of the semiconductor catalyst layer 40. Fig. 4 illustrates six pillar structures 70 by way of example, but the number of pillar structures 70 is not limited to this. By arranging the pillar structures 70, the contact area of the semiconductor photocatalyst layer 40 with a solvent such as an aqueous medium and the like (the area of the side faces of the photocatalyst layer 40) may be increased by the number of pillar structures 70. This may increase the frequency of occurrence of reactions used for the hydrogen production.

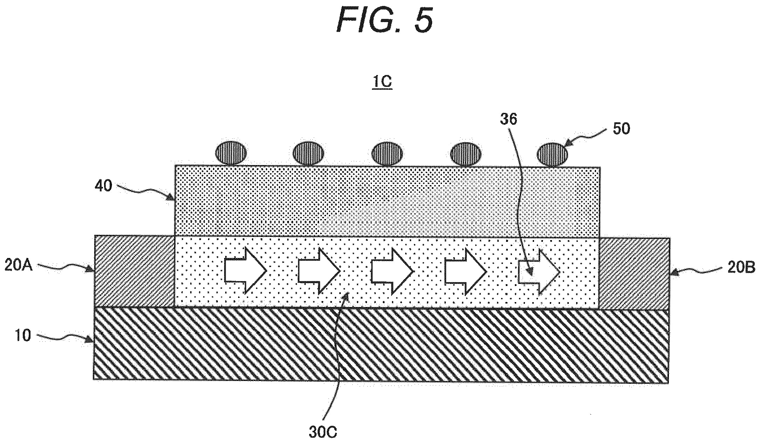

Fig. 5 is a cross-sectional view illustrating a fourth example configuration of a photocatalyst electrode according to the embodiments. The differences between a photocatalyst electrode 1C illustrated in Fig. 5 and the photocatalyst electrode 1 in Fig. 1 are, in the photocatalyst electrode 1C, that a ferroelectric layer 30C is formed in contact with the top face (surface) of the substrate 10 and that the ferroelectric layer 30C is formed between a first electrode (electrode layer) 20A and a second electrode (electrode layer) 20B. Electric polarization 36 of the ferroelectric layer 30C is oriented in a direction parallel to the top face of the substrate 10 (horizontal direction) in accordance with the direction of the electric field applied by the electrode 20A and the electrode 20B. In this manner, the ferroelectric layer 30C and the electrodes 20A, 20B may be in contact with the top face of the substrate 10. The structure of sandwiching the ferroelectric layer 30C between the electrodes 20A, 20B allows an electric filed to be externally applied to the ferroelectric layer 30C through the electrodes 20A, 20B so that the polarization direction of the ferroelectric layer 30C is controlled.

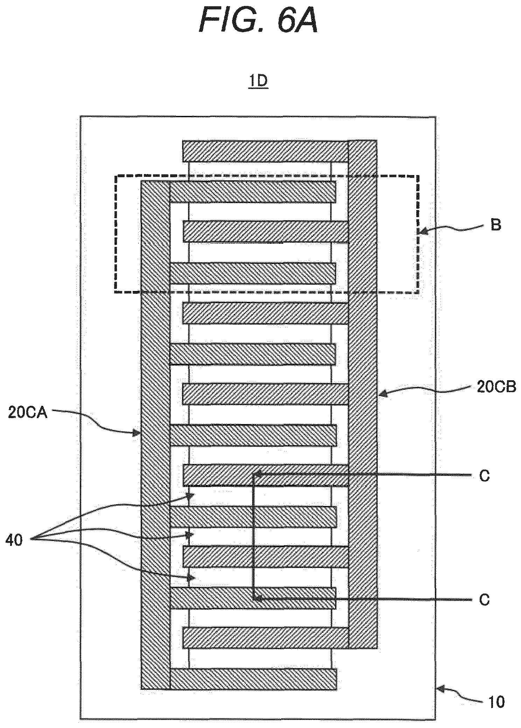

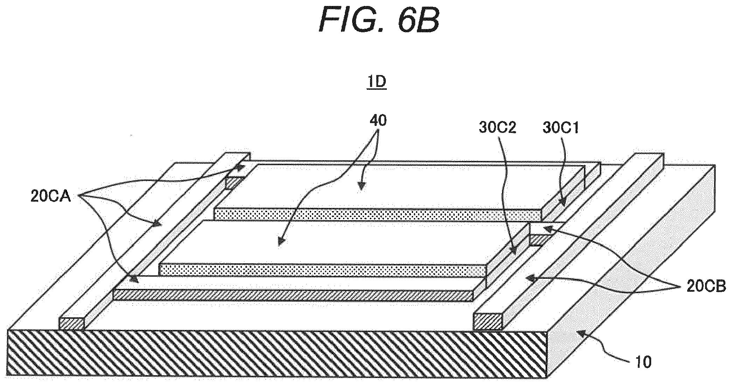

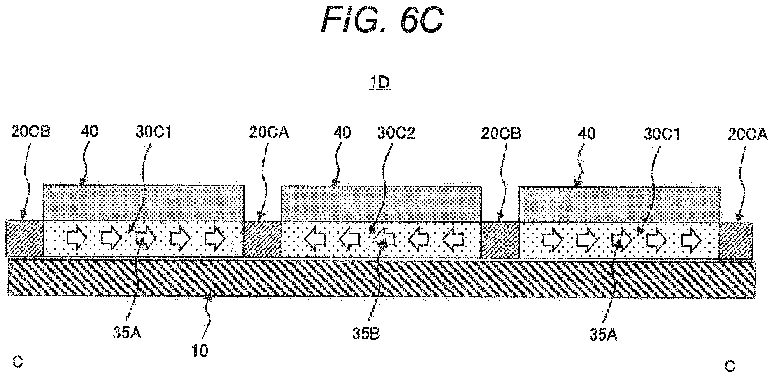

The two electrodes 20A, 20B in Fig. 5 may be, in planar view, two comb electrodes, first electrode 20CA and a second electrode 20CB, as illustrated in Fig. 6A. Fig. 6A is a plan view illustrating a fifth example configuration of a photocatalyst electrode according to the embodiments. Fig. 6B is a perspective view illustrating a region B in Fig. 6A. Fig. 6C is a cross-sectional view of the photocatalyst electrode taken along the C-C line of Fig. 6A. In a photocatalyst electrode 1D illustrated in Fig. 6A to Fig. 6C, an electric field may be applied to ferroelectric layers 30C1, 30C2 by the two comb electrodes, the first electrode 20CA and the second electrode 20CB. This enables the control of the polarization directions of the ferroelectric layers 30C1, 30C2 as illustrated in Fig. 6C. In an example illustrated in Fig. 6C, the direction of the polarization 35B of the ferroelectric layer 30C2 is 180 degrees different from the direction of the polarization 35A of the ferroelectric layer 30C1. In this manner, it is possible to make the ferroelectric layers 30C1, 30C2 respectively having the same polarization directions.

In the configuration of the photocatalyst electrode 1D in Fig. 6A to Fig. 6C, the ferroelectric layers (30C2 or 30C1) with the polarization direction oriented to the same direction may be designed by removing both of the ferroelectric layers 30C1 and the semiconductor layers 40 formed on the ferroelectric layers 30C1 or by removing both of the ferroelectric layers 30C2 and the semiconductor layers 40 formed on the ferroelectric layers 30C2. The promotors 50 may be placed on the top faces of the semiconductor catalyst layers 40.

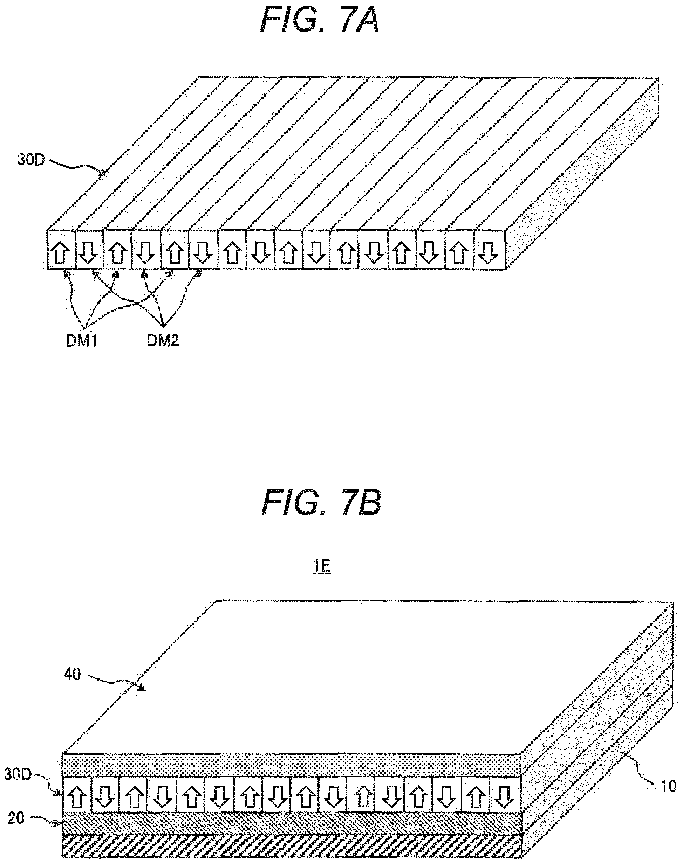

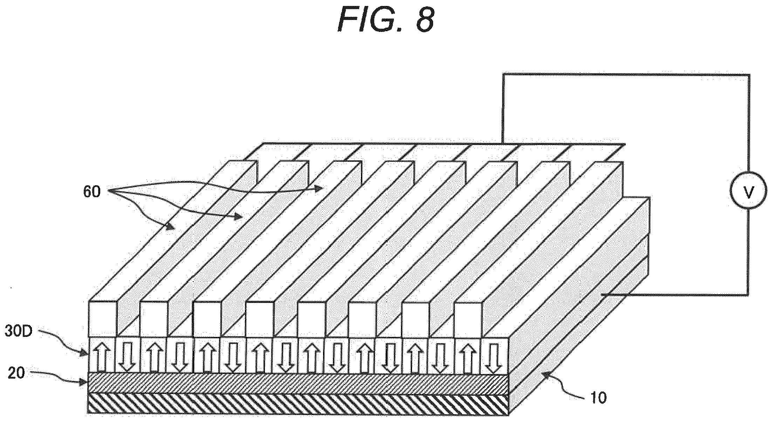

The ferroelectric layer 30 in Fig. 1 may be designed to have a plurality of periodically polarization-inverted ferroelectric domains. Fig. 7A is a diagram illustrating a ferroelectric layer having a plurality of periodically polarization-inverted ferroelectric domains. Fig. 7B is a plan view illustrating a sixth example configuration of a photocatalyst electrode according to the embodiments. Fig. 8 is a diagram illustrating how to form the photocatalyst electrode in Fig. 7B.

As illustrated in Fig. 7A, a ferroelectric layer 30D has a plurality of periodically polarization-inverted ferroelectric domains DM1, DM2 (polarization inversion structure). As illustrated in Fig. 7B, a photocatalyst electrode 1E has the ferroelectric layer 30D placed between the electrode 20 and the semiconductor photocatalyst layer 40. In this manner, the ferroelectric domains DM1, DM2 are arranged to have a periodic 180-degree inversion structure, so that the semiconductor photocatalyst layer 40 in contact with the top portions of the ferroelectric domains DM1, DM2 undergo periodically different electric fields (potential gradients), and the electrons and the positive holes (holes) are regularly separated according to the placement of the ferroelectric domains DM1, DM2. That is, placing the semiconductor photocatalyst layer 40 on the ferroelectric domains DM1, DM2 structured as described above enables spatial separation between the electrons and the holes and inhabitation of recombination of the electrons and the holes. The ferroelectric layer 30D may be formed from materials such as lithium niobate which is ferroelectrics.

As illustrated in Fig. 8, multiple stripe shaped electrodes 60 are created on the top portion of the ferroelectric layer 30D made of lithium niobate (LiNbO₃), then a voltage V is applied in order to make the ferroelectric domains DM1, DM2 with polarization periodically inverted by 180 degrees. After that, the multiple stripe shaped electrodes 60 are removed, and the semiconductor photocatalyst layer 40 is formed to be in contact with the top portion of the ferroelectric layer 30D. As a result, the photocatalyst electrode 1E is formed as illustrated in Fig. 7B. Although not shown, the multiple stripe shaped electrodes 60 may not be removed, and the semiconductor photocatalyst layer 40 may be formed on the multiple stripe shaped electrodes 60 and on the top portions of the ferroelectric layer 30D exposed between the multiple stripe shaped electrodes 60, and thus forming a photocatalyst electrode.

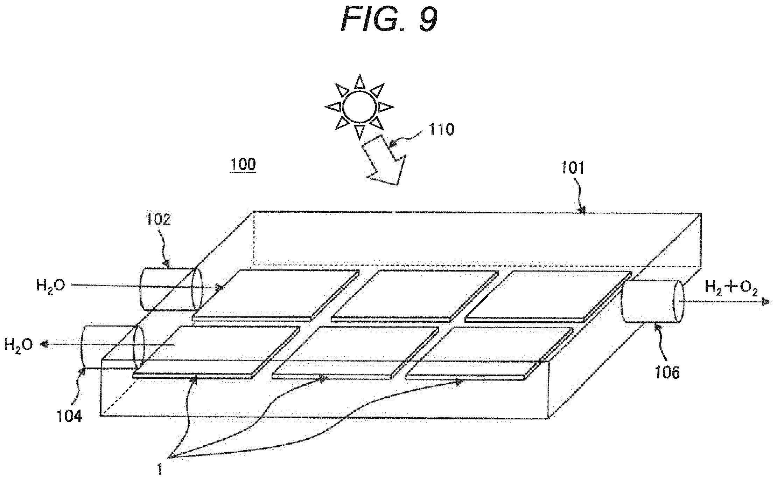

Fig. 9 is a diagram illustrating an example conceptual configuration of a hydrogen production cell according to the embodiments. As illustrated in Fig. 9, a hydrogen production cell 100 has a housing 101 in which an aqueous medium (H₂O) can be stored. The housing 101 is provided with an inlet 102 through which the aqueous medium flows into the housing 101, an outlet 104 through which the aqueous medium flows out of the housing 101, and a gas delivery port 106 through which hydrogen and oxygen are extracted from the interior of the housing 101. In a portion of the housing 101, a transparent window is installed which is formed from a transparent material such as glass and/or the like to allow the solar light 110 to pass through. The multiple photocatalyst electrodes 1 are installed within the housing 101. Wiring (not shown) connected to the electrodes 20 of the photocatalyst electrodes 1 is installed in the housing 101. An electric field is applied to the ferroelectric layers 30 through the wiring to control the polarization of the ferroelectric layers 30.

The aqueous medium is introduced into the housing 101, and the multiple photocatalyst electrodes 1 are placed in the aqueous medium. While the multiple photocatalyst electrodes 1 are being placed in the aqueous medium, the multiple photocatalyst electrodes 1 are irradiated with the solar light 110, which in turn causes a water decomposition reaction by a photocatalytic reaction to occur, so that hydrogen and oxygen may be extracted through the gas delivery port 106. In this regard, the photocatalyst electrode 1 may be replaced with the photocatalyst electrode 1A, 1B, 1C, 1D, or 1E described in the above embodiments.

Next, an example method of manufacturing a photocatalyst electrode will be described.

### Manufacture method 1 for photocatalyst electrode 1 in Fig. 1

A quartz substrate 10 is prepared. A Pt electrode 20 is formed on the principal surface of the substrate 10. For example, the electrode 20 is formed through Pt vapor deposition to a film thickness of 50 nm. A ferroelectric layer 30 is then formed on the electrode 20. For example, the ferroelectric layer 30 is formed by performing sputtering to deposit a BaTiO₃ thin film of a thickness of 300 nm. Then, a semiconductor photocatalyst layer 40 is formed on the ferroelectric layer 30. For the semiconductor photocatalyst layer 40, for example, a target containing Y, Ti, sulfur and oxygen in a 2:2:2:5 ratio is sputtered to produce a Y₂Ti₂O₅S₂ semiconductor film with a film thickness of the order of 300 nm. As a result, a stacking structure of the substrate 10, electrode 20, ferroelectric layer 30, and the semiconductor photocatalyst layer 40 may be formed.

### Manufacture method 2 for photocatalyst electrode 1A in Fig. 3

A quartz substrate 10 is prepared. A Pt electrode 20 is formed on the principal surface of the substrate 10. For example, the electrode 20 is formed through Pt vapor deposition to a film thickness of 50 nm. A ferroelectric layer 30 is formed on the electrode 20. For example, the ferroelectric layer 30 is formed by performing sputtering to deposit a BaTiO₃ thin film of a thickness of 10 nm. Then, a semiconductor photocatalyst layer 40 is formed on the ferroelectric layer 30. For the semiconductor photocatalyst layer 40, for example, a target containing Y, Ti, sulfur, and oxygen in a 2:2:2:5 ratio is sputtered to produce a Y₂Ti₂O₅S₂ semiconductor film with a film thickness of the order of 10 nm. Then, the BaTiO₃ thin film as a ferroelectric layer and the Y₂Ti₂O₅S₂ semiconductor film as a semiconductor photocatalyst layer are produced to form a 10-period multilayer (BaTiO₃-Y₂Ti₂O₅S₂ × 10 sets) . As a result, a multiplayer stacking structure of the substrate 10, electrode 20, ferroelectric layer 30, and the semiconductor photocatalyst layer 40 may be formed.

### Manufacture method 3 for photocatalyst electrode 1B in Fig. 4

A quartz substrate 10 is prepared. A photoresist coating is applied to the principal surface of the substrate 10. The photoresist is patterned through photolithography to create an array structure in which 1-µm squares are arranged to be spaced at 1-µm intervals. Specifically, the photoresist is patterned such that portions where the pillar structures 70 are to be formed are removed. The principal surface of the substrate 10 is exposed, in the 1-µm square pattern, at the portions where the photoresist is removed. Then, a Pt electrode 20 is formed on the photoresist and on the exposed area of the principal surface of the substrate 10. For example, the electrode 20 is formed through Pt vapor deposition to a film thickness of 50 nm. A ferroelectric layer 30 is formed on the electrode 20. For example, the ferroelectric layer 30 is formed by performing sputtering to deposit a BaTiO₃ thin film of a thickness of 10 nm. Then, a semiconductor photocatalyst layer 40 is formed on the ferroelectric layer 30. For the semiconductor photocatalyst layer 40, for example, a target containing Y, Ti, sulfur, and oxygen in a 2:2:2:5 ratio is sputtered to produce a Y₂Ti₂O₅S₂ semiconductor film with a film thickness of the order of 10 nm. Then, the BaTiO₃ thin film as a ferroelectric layer and the Y₂Ti₂O₅S₂ semiconductor film as a semiconductor photocatalyst layer are produced to form a 10-period multilayer (BaTiO₃-Y₂Ti₂O₅S₂ × 10 sets) . As a result, a multiplayer stacking structure of the substrate 10, electrode 20, ferroelectric layer 30, and the semiconductor photocatalyst layer 40 may be formed. Then, the photoresist is removed by performing the lift-off process. As a result, the pillar structures 70 may be formed.

If the 10-period multilayer staking structure of the ferroelectric layers 30 and the semiconductor photocatalyst layers 40 is unnecessary, in the process of forming the ferroelectric layer 30 on the electrode 20, sputtering is performed to deposit a BaTiO₃ thin film of a thickness of 300 nm. Then, a semiconductor photocatalyst layer 40 is formed on the ferroelectric layer 30. For the semiconductor photocatalyst layer 40, for example, a target containing Y, Ti, sulfur and oxygen in a 2:2:2:5 ratio is sputtered to produce a Y₂Ti₂O₅S₂ semiconductor film with a film thickness of the order of 300 nm. Then, the photoresist is removed by performing the lift-off process.

### Manufacture method 4 for photocatalyst electrode 1E in Fig. 7B

A quartz substrate 10 is prepared. A Pt electrode 20 is formed on the principal surface of the substrate 10. For example, the electrode 20 is formed through Pt vapor deposition to a film thickness of 50 nm. A ferroelectric layer 30D made of lithium niobate (LiNbO3) is formed on the electrode 20. In the ferroelectric layer 30D, ferroelectric domains (DM1, DM2) are formed to have polarization periodically inverted by 180 degrees (see Fig. 8). A semiconductor photocatalyst layer 40 is formed on the top portion of the ferroelectric layer 30. For the semiconductor photocatalyst layer 40, for example, suppering is performed to produce a Y₂Ti₂O₅S₂ film a film thickness of the order of 100 nm. As a result, a photocatalyst electrode 1E is formed.

### Manufacture method 5 for hydrogen production cell 100

The photocatalyst electrode 1 produced by manufacture method 1 and illustrated in Fig. 1 is immersed in an IrO₂ colloidal dispersion solution, and then dried in a vacuum. This allows IrO₂ to adhere as promoters onto the semiconductor photocatalyst layer 40. The photocatalyst electrode 1 with the promoters is placed in the aqueous medium in the hydrogen production cell 100, and then irradiated with solar light. Thus, occurrence of hydrogen may be confirmed.

In the above description of the manufacture methods, the instance of using Y₂Ti₂O₅S₂ as a material of the semiconductor photocatalyst layer 40 has been mentioned, but other material systems used as a base material to be doped may include, but are not limited to, ATa₂O₆(A:Sr,Ba), Sr₂Nb₂O₇, Sr₂Ta₂O₇, ATa₂O₆ (A: Ca, Sr, Ba), K₃Ta₃Si₂O₁₃, ATaO₃ (A:Li,Na,K), AgTaO₃, NaTaO₃:La, NaTaO₃:A(A:Ca,Sr,Ba), K₂LnTa₅O₁₅, K₃Ta₃B₂O₁₂, Cs₂Nb₄O₁₁, Ba₅Nb₄O₁₅, ATa₃O₈ (A:Rb,Cs), Cs₄Ta₁₀O₂₇, Cs₆Ta₁₆O₄₃, ZnS, NaInS₂, SrTiO₃, AgGaS2, CuGaS2, CuInS2-AgInS2-ZnS, CuInS2-AgInS2, SnNb₂O₆, BiVO₄, Bi₂MoO₆, Bi₂WO₆, AgNbO₃, Ag₃VO₄, Ag_{0.5}Pr_{0.5}TiO₃, TiO₂, PbMoO₄:Cr, A₂Ti₂O₇ (A:Sc,Y,La), SnNb₂O₆, and the like. Likewise in regard to the ferroelectric layer 30, not only BaTiO₃ but also other spontaneously polarizing materials may be used.

The present invention carried out by the inventors has been detailed based on example embodiments, but it will be apparent that the present invention is not limited to the above embodiments and various modifications and variations can be made to the embodiments.

### REFERENCE SIGNS LIST

1, 1A, 1B, 1C, 1D, 1E ... photocatalyst electrode
10 ... substrate
20, 20A, 20B, 20CA, 20CB ... electrode
30, 30A, 30B, 30C, 30C1, 30C2, 30D ... ferroelectric layer
35 ... polarization
40 ... semiconductor photocatalyst layer
50 ... promoter
60 ... stripe shaped electrode
70 ... pillar structure
100 ... hydrogen production cell
101 ... housing
102 ... inlet
104 ... outlet
106 ... gas delivery port
110 ... solar light

## Claims

1. A hydrogen production cell comprising:
a photocatalyst composed of a semiconductor;
an aqueous medium; and
a ferroelectric substance placed to face the photocatalyst, the ferroelectric creating a potential gradient with respect to the photocatalyst.

2. The hydrogen production cell according to claim 1 comprising a plurality of sets of the photocatalyst and the ferroelectric substance.

3. The hydrogen production cell according to claim 1, wherein the ferroelectric substance is a multiferroic substance exhibiting magnetization at room temperature.

4. The hydrogen production cell according to claim 1, wherein the ferroelectric substance has periodically polarization-inverted ferroelectric domains (DM1, DM2), the ferroelectric domains (DM1, DM2) presenting respective potential gradients in different directions.

5. The hydrogen production cell according to claim 1, wherein the ferroelectric substance and the photocatalyst have a pillar structure (70).

6. The hydrogen production cell according to claim 1,
a housing (10) in which the aqueous medium is stored; and
a photocatalyst electrode placed in the aqueous medium,
wherein the photocatalyst electrode includes
the photocatalyst layer composed of a semiconductor, and
the ferroelectric layer (30) creating a potential gradient with respect to the photocatalyst layer, and
the ferroelectric layer (30) is placed to face the photocatalyst layer.

7. The hydrogen production cell according to claim 6 (30), wherein the photocatalyst layer and the ferroelectric layer are designed as a multilayer structure having a plurality of sets of the photocatalyst layer and the ferroelectric layer (30, 30A, 30B, 30C, 30C1, 30C2, 30D).

8. The hydrogen production cell according to claim 6, wherein the photocatalyst electrode includes
a substrate (10),
a plurality of the ferroelectric layers (30) that are placed on the substrate (10), and
a plurality of the photocatalyst layers that are respectively placed in contact with tops of the plurality of the ferroelectric layers (30), and
each of the ferroelectric layers (30) and each of the photocatalyst layers that is placed in contact with the top of the corresponding ferroelectric layer (30) are designed as a pillar structure (70).

9. The hydrogen production cell according to claim 6,
wherein the ferroelectric layer (30) has a plurality of periodically polarization-inverted ferroelectric domains (DM1, DM2), and
the photoelectric layer (30) is subjected to periodically different potential gradients by the plurality of the ferroelectric domains (DM1, DM2).

10. The hydrogen production cell according to claim 6, wherein the photocatalyst electrode (1, 1A, 1B, 1C, 1D, 1E) includes
a substrate (10), and
an electric layer (30) formed on the substrate (10), and
the ferroelectric layer is formed in contact with a top of the electrode layer.

11. The hydrogen production cell according to claim 6, wherein the photocatalyst electrode includes
a substrate (10), and
a first electrode layer and a second electrode layer that are formed on the substrate (10),
the ferroelectric layer (30) is formed on the substrate (10) and between the first electrode layer and the second electrode layer, and
the ferroelectric layer (30) is given an electric field by the first electrode layer and the second electrode layer.

12. The hydrogen production cell according to claim 11, wherein the first electrode layer forms a comb electrode in planar view, and the second electrode layer forms a comb electrode in planar view.

13. The hydrogen production cell according to claim 6, wherein the ferroelectric layer (30) is formed from multiferroic materials exhibiting magnetization at room temperature.
